# EUROPÄISCHE PATENTSCHRIFT

(11) **EP 2 485 985 B1**
(45) Veröffentlichungstag und Bekanntmachung des Hinweises auf die Patenterteilung: **30.11.2016**
(21) Anmeldenummer: 10734028.3
(22) Anmeldetag: 16.06.2010
(51) Int. Cl.: C02F 3/12, C02F 3/20

(54) **VORRICHTUNG ZUM REINIGEN VON ABWASSER**
APPARATUS FOR CLEANING WASTEWATER
DISPOSITIF POUR L'ÉPURATION D'EAUX USÉES

(30) Priorität: 16.06.2009 DE 102009025082
(43) Veröffentlichungstag der Anmeldung: 15.08.2012
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2010/003606
(87) Internationale Veröffentlichungsnummer: WO 2010/145810

(56) Entgegenhaltungen:
- WO-A1-95/17351
- US-A- 4 618 418
- US-A- 4 931 442
- US-A- 4 983 298
- US-A- 5 055 186

## Beschreibung

Die Erfindung betrifft ein Verfahren und eine Vorrichtung zum Reinigen von Abwasser unter Verwendung von aeroben Mikroorganismen.

Es sind bereits zahlreiche Verfahren und Vorrichtungen zum Reinigen von Abwasser unter Verwendung von aeroben Mikroorganismen bekannt. Den bekannten Vorrichtungen haften jedoch in der Regel die Nachteile an, dass komplizierte aufgebaute Apparatur und ein entsprechender Abbauaufwand erforderlich ist, um einen befriedigenden Durchsatz durch die Vorrichtung und damit eine kostengünstige Reinigung des Abwassers zu erreichen.

Die WO 95/17351 betrifft einen Behandlungsbehälter, der ein Fluidbett aus losem Teilchenmaterial enthält, welches Teilchen aus scharfem Sand umfasst, der an Granulat aus Polyethylen haftet, um einen Lebensraum für Mikroorganismen zu schaffen, die bei der Behandlung von Abwasser effektiv sind. Das Material hat eine Dichte etwas geringer als 1,0 g/cm³, einen spezifischen Oberflächenbereich oberhalb von 600 m²/m³ und eine Teilchengröße im Bereich von 3 bis 10 mm. Das Bett und das Abwasser werden fluidisiert und durch Luftblasen mit Sauerstoff versorgt, die aus selbstabdichtenden Belüftungseinrichtungen abgegeben werden, die an der Basis des Bettes angeordnet sind und zum Einführen und Entfernen von oberhalb des Wasserniveaus her ausgelegt sind. Das lose Material kann direkt auf der Belüftungseinrichtungsoberfläche

Die US-A-4 931 442 offenbart eine wässrige Vitaminzubereitung, die Folsäure und/oder mindestens ein Ammonium-, Alkalimetall- und/oder Erdalkali-metallsalz derselben enthält, mit verbesserter Gehaltsstabilität in Gegenwart von Sauerstoff, dadurch gekennzeichnet, dass sie als Stabilisator enthält eine Kombination aus (a) Dihydrofolsäure und/oder mindestens einem Ammonium-, Alkalimetall-, Erdalkalimetall- und/oder Alkanolammonium-salz derselben und (b) mindestens einer Hydroxypolycarbonsäure und/oder mindestens einem Ammonium-, Alkalimetall-, Erdalkalimetall- und/oder Alkanolammoniumsalz derselben. Die Dihydrofolsäure und/oder mindestens ein Ammonium-, Alkalimetall-, Erdalkalimetall- und/oder Alkanolammoniumsalz derselben sind in einer Menge von 0,001 bis 0,1 Mol enthalten und/oder mindestens ein Ammonium-, Alkalimetall-, Erdalkalimetall- und/oder Alkanolammoniumsalze derselben sind in einer Menge von 0,05 bis 2,5 Mol pro Mol Folsäure und/oder Ammonium-, Alkalimetall- und/oder Erdalkalimetallsalz derselben enthalten.

Die US-A-4 618 418 betrifft einen Fluidbettreaktor mit einem Reaktorraum, um Abwasser mit Biomasse zu reinigen, die an Trägerpartikeln angelagert sind. Eine Flüssigkeitsverteilereinrichtung ist oberhalb des Bodens des Reaktionsraums angeordnet und geeignet, das Abwasser in weiträumige Reaktoren einzuführen, um eine gleichförmige Fluidisierung darin zu erreichen. Die Vorrichtung besteht aus einer Anzahl von im Wesentlichen horizontalen Rohren, die jeweils auf ihrer Unterseite eine Anzahl von gleichmäßig verteilten Öffnungen aufweisen, um die Flüssigkeit nach unten zuzuführen. In dem oberen Bereich des Reaktionsraums ist eine multifunktionale Trennkammer vorgesehen, um die Mischung aus Gas, Flüssigkeit und Feststoffen vollständig zu trennen und um die daran haftende Biomasse in den Reaktionsraum vollständig zurückzuführen. Die Trennkammer hat eine solche Konstruktion, dass große oder kleine Gasfraktionen in den Reaktoren von variierenden breiten Abmessungen behandelt werden können.

Die US-A-4 983 298 betrifft ein Verfahren zur Entseuchung und aeroben Stabilisierung von eingedicktem Klärschlamm in mehreren Stufen in einem oder mehreren wärmeisolierten und gerührten Behältern unter Zufuhr von sauerstoffhaltigem Gas, dadurch gekennzeichnet, dass der anfallende auf mindestens 2 % TS eingedickte Rohschlamm, gegebenenfalls unter Vorwärmung, danach allein durch aeroben Abbau ohne Zufuhr von Fremdwärme innerhalb von 2 bis 4 Tagen bis in den thermophilen Temperaturbereich von > 50°C gebracht, durch weiteren aeroben Abbau ohne Zufuhr von Fremdwärme von mindestens 20 Stunden bei 50 bis 55 °C oder mindestens 10 Stunden bei > 55 °C entseucht und durch aktives Abkühlen auf 25 bis 45 °C und weiteren aeroben Abbau innerhalb von 2 bis 8 Tagen, vorzugsweise innerhalb von 3 bis 5 Tagen, mesophil stabilisiert wird.

Die US-A-5 055 186 A zeigt eine Vorrichtung zum Reinigen vom Abwasser mit einem Durchlauftank, wobei in dem Durchlauftank Füllstoffkörper vorhanden sind, an die aerobe Mikroorganismen angelagert sind, und wobei an dem Durchlauftank eine Belüftungseinrichtung zur Belüftung des Abwassers in dem Durchlauftank mit einem sauerstoffhaltigen Gas vorgesehen ist. Die Füllstoffkörper haben ein spezifisches Gewicht etwa gleich dem spezifischen Gewicht des Abwassers, wobei die Füllstoffkörper in dem Abwasser schweben. Die Belüftung des Durchlauftanks erfolgt über Verteilerrohre, die am Boden des Durchlauftanks angeordnet sind.

Der Erfindung liegt nun die Aufgabe zugrunde, eine Vorrichtung bereitzustellen, bei der bei geringem Bauaufwand eine hohe Durchsatzleistung erreicht wird, wobei das Verhältnis von Baugröße und Durchsatz bei der erfindungsgemäßen Vorrichtung optimiert werden soll.

Dazu hat die erfindungsgemäße Vorrichtung die in Anspruch 1 angegebenen Merkmale. Vorteilhafte Ausgestaltungen der Erfindung sind in den Unteransprüchen charakterisiert.

Durch diesen einfachen Aufbau wird in vorteilhafter Weise erreicht, dass eine große Durchflussmenge bei geringem Bauaufwand und bei geringer Baugröße durch die erfindungsgemäße Vorrichtung erreicht werden kann. Durch die in den Tankboden integrierten Verteilerrohre mit Düsenöffnungen wird auch eine nahezu flächige Verteilung der Gaszufuhr zu dem Durchflusstank ohne Strömungsstörung erreicht, und die flächige Wirkung der Verteilerrohre im Bezug auf die Gaszufuhr wird durch die Anordnung von wenigstens zwei Verteilerrohren optimiert.

Nach einer vorteilhaften Ausgestaltung der Erfindung ist die Vorrichtung dadurch gekennzeichnet, dass die Verteilerrohre rechteckig sind, und dass die zwei Seitenflächen der Verteilerrohre im Winkel von 45 Grad zu dem Tankboden stehen, so dass zwei Seiten der Verteilerrohre 6 mit dem zu reinigenden Abwasser in direkten Kontakt stehen. Durch diese Ausgestaltung der Verteilerrohre als rechteckige Rohre wird einerseits eine Stabilisierung des Tankbodens erreicht und andererseits wird durch die schräge Anordnung der Seitenflächen der Verteilerrohre eine gute Durchmischung der Gasblasen mit dem Abwasser in dem Durchflusstank erreicht.

Nach der Erfindung ist die Vorrichtung dadurch gekennzeichnet, dass die Düsenöffnungen der Verteilerrohre die Form von Löchern oder Schlitzen haben, was bedeutet, dass die Düsenöffnungen keine spezielle Form haben müssen, um als Düsen für die Zufuhr von sauerstoffhaltigem Gas an den Durchflusstank verwendet zu werden.

Nach einer weiteren vorteilhaften Ausgestaltung der Erfindung ist die Vorrichtung dadurch gekennzeichnet, dass die Düsenöffnungen runde Bohrungen/Schlitze mit etwa 3 bis 6 Millimeter größtem Durchmesser aufweisen. Im Hinblick auf den Druck des zugeführten Gases und dem hydrostatischen Druck in dem Durchflusstank haben sich diese Abmessungen der Düsenöffnungen besonders bewährt.

Nach der Erfindung ist die Vorrichtung dadurch gekennzeichnet, dass die Düsenöffnungen über die ganze Länge der Verteilerrohre verteilt sind, was sich günstig auf die Verteilung der Gaszufuhr zu dem Durchflusstank auswirkt.

Nach einer weiteren vorteilhaften Ausgestaltung der Erfindung ist die Vorrichtung dadurch gekennzeichnet, dass Ablaufschlitze für das gereinigte Abwasser am oberen Umfang des Durchlauftank vorgesehen sind, wobei die Ablaufschlitze einen Querdurchmesser haben, welcher kleiner ist als der kleinste Durchmesser der Füllkörper. Damit wird ein ungestörter Abfluss des gereinigten Abwassers ermöglicht, sodass auch hier keine Strömungsstörung stattfindet. Es wird auch in vorteilhafter Weise erreicht, dass die Füllkörper in dem Durchflusstank verbleiben, ohne dass besondere Abdeckungsmaßnahmen erforderlich sind.

Nach einer weiteren vorteilhaften Ausgestaltung der Erfindung ist die Vorrichtung dadurch gekennzeichnet, dass ein Überlaufwehr an dem Durchlauftank am oberen Ende unterhalb der Ablaufschlitze angeordnet ist, und dass das Überlaufwehr den Ablaufstutzen zur Ableitung des gereinigten Abwassers aufweist, wodurch das gereinigte Abwasser in einfacher Weise abgeführt werden kann.

Nach einer weiteren vorteilhaften Ausgestaltung der Erfindung ist die Vorrichtung dadurch gekennzeichnet, dass ein Überlaufwehr den Durchlauftank am oberen Ende kragenförmig umschließt, wobei das gereinigte Abwasser auf dem kürzesten Weg aus der Vorrichtung herausgeführt werden kann.

Nach einer weiteren vorteilhaften Ausgestaltung der Erfindung ist die Vorrichtung dadurch gekennzeichnet, dass ein Tankdeckel, welcher einen größeren Durchmesser als das Überlaufwehr ausweist, in Abstand von dem Überlaufwehr angeordnet ist, wodurch der obere Teil des Durchlaufbehälters und auch das Überlaufwehr gegen Verschmutzungen gesichert werden. Da der Tankdeckel in einem Abstand von dem Überlaufwehr angeordnet ist, kann der Abgasstrom aus dem Durchlauftank ungehindert ins Freie austreten.

Nach einer weiteren vorteilhaften Ausgestaltung der Erfindung ist die Vorrichtung dadurch gekennzeichnet, dass eine Heizeinrichtung auf der Außenfläche des Durchlauftanks angeordnet ist, wodurch Temperaturschwankungen der Umgebung durch einfache Weise ausgeglichen werden können.

Nach einer weiteren vorteilhaften Ausgestaltung der Erfindung ist die Vorrichtung dadurch gekennzeichnet, dass die Heizeinrichtung einen Wärmetauscher mit mindestens einem Zuflussstutzen und mindestens einem Abflussstutzen für einen flüssigen Wärmeträger aufweist.

Ein Wärmetauscher mit Flüssigkeits-Wärmeübertragungsmittel ist in diesem Umfeld eine vorteilhafte Lösung des Problems, wie der Durchflussbehälter auf der gewünschten Temperatur gehalten werden kann.

Nach einer weiteren vorteilhaften Ausgestaltung der Erfindung ist die Vorrichtung dadurch gekennzeichnet, dass eine Isolierung aus gering die Wärme leitendem Isolierstoff außen auf dem Durchlauftank über der Heizeinrichtung anordnet ist, wodurch die Vorrichtung gegen Wärmeverluste geschützt wird, falls eine entsprechende Aufheizung des Abwassers in dem Durchlauftank erforderlich ist.

Nach einer weiteren vorteilhaften Ausgestaltung der Erfindung ist die Vorrichtung gekennzeichnet durch ein Gebläse welches sauerstoffhaltiges Gas durch eine Gaszuleitung und durch die Stutzen für die Gaszufuhr in den gefüllten Durchlauftank fördert. Ein derartiges Gebläse ist die einfachste und damit vorteilhafteste Lösung, um den Durchlauftank mit sauerstoffhaltigem Gas zu versorgen.

Nach einer weiteren vorteilhaften Ausgestaltung der Erfindung ist die Vorrichtung gekennzeichnet durch einen Folattank, der mit wässrig verdünnter, stabilisierter Folsäurelösung zu befüllen ist und der mit einer Zuflussleitung für das Abwasser zu dem Durchlauftank verbunden ist. Die Anwendung von wässrig verdünnter, stabilisierter Folsäure auf derartige Abwässer hat den Vorteil, dass die Effektivität der Umsetzung der Schadstoffe durch die Mikroorganismen verbessert und eine Überschussschlammbildung nachhaltig verringert wird.

Nach einer weiteren vorteilhaften Ausgestaltung der Erfindung ist die Vorrichtung dadurch gekennzeichnet, dass sie zwischen dem Folattank und einem in die Zuflussleitung für das zu reinigende Rohwasser eingesetzten Impfstutzen eine Folatleitung, eine Dosierpumpe, ein Rückschlagventil und ein Regelventil aufweist. Dadurch ist es in einfacher Weise möglich, genügend wässrig verdünnte, stabilisierte Folsäure zu dem Abwasserstrom hinzuzudosieren.

Die Ausführungsbeispiele der Erfindung werden an Hand der beigefügten Zeichnungen erläutert, in denen
Fig. 1 einen schematischen Schnitt durch eine Vorrichtung zum Reinigen vom Abwasser zeigt;
Fig. 2 eine perspektivische Teilansicht der Vorrichtung nach Fig. 1 mit teilweise geschnittenem Tankmantel eines Durchlauftanks zeigt; und
Fig. 3 eine perspektivische Teilansicht der Vorrichtung nach Fig. 1 mit dem abgenommenen Deckel zeigt.

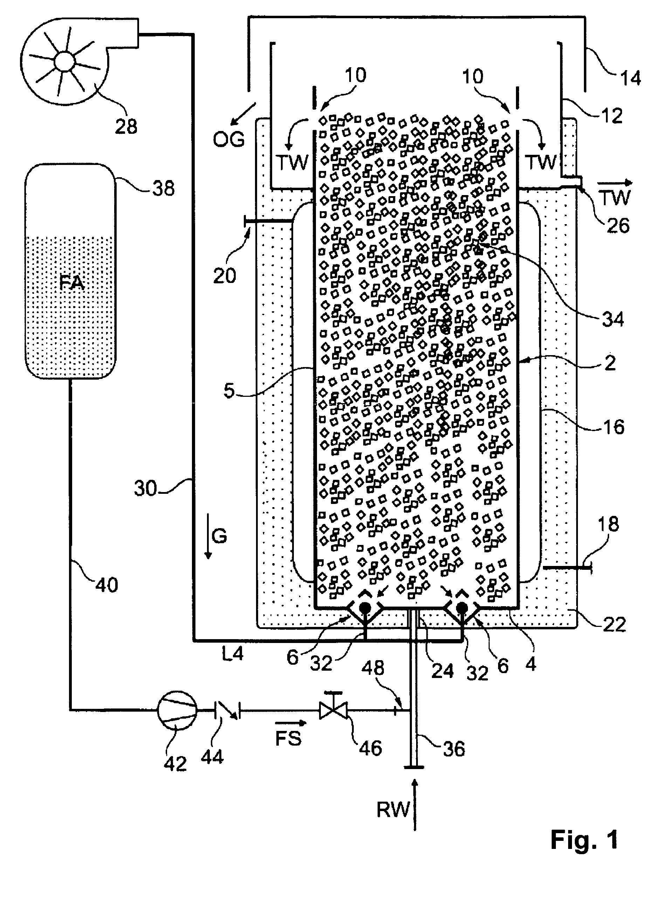

Gemäß Figur 1 weist die Vorrichtung zum Reinigen vom Abwasser einen Durchlauftank 2 mit einem ebenen Tankboden 4 und einer Tankwand 5 auf, durch den das zu reinigende Abwasser geleitet wird. Im Betrieb ist der Durchlauftank 2 mit dem zu reinigenden Abwasser und mit frei beweglichen, mit Mikroorganismen besiedelten, schwebenden Füllkörpern 34 gefültt.

In den Tankboden 4 sind rechteckige Verteilerrohre 6 so eingeschweißt, so dass mindestens eine Seite der Verteilerrohre 6 mit dem zu reinigenden Abwasser in Kontakt ist. Vorzugsweise werden die Verteilerrohre 6, wie aus Fig.1 ersichtlich, so in den Tankboden 4 eingeschweißt, dass zwei ihrer Seitenflächen im Winkel von 45 Grad zu dem ebenen Tankboden 4 stehen, so dass zwei Seiten der Verteilerrohre 6 mit dem zu reinigenden Abwasser in direkten Kontakt stehen. In dieser 45 Grad Stellung wirken die Verteilerrohre maximal als mechanische Versteifung des Bodens und außerdem bewirkt die 45 Grad Stellung der wasserbenetzten Düsenflächen eine optimale Ablösung und Verteilung der aus den Belüftungsdüsen 8 in das Wasser austretenden Gasblasen.

An den Seiten der Verteilerrohre 6, die mit dem zu reinigenden Abwasser in Kontakt stehen, sind Düsenöffnungen 8 vorgesehen. Die Düsenöffnungen 8 haben die Form von Löchern oder Schlitzen, vorzugsweise runde Bohrungen mit etwa 3 bis 6 Millimeter Durchmesser, und sind über die ganze Länge des Verteilerrohres 6 angeordnet. Die Verteilerrohre 6 sind an Ihren Stirnseiten mit Schaugläsern 50 versehen.

Die Verteilerrohre 6 weisen an mindestens einem Rohrende einen Stutzen 32 für die Zufuhr von sauerstoffhaltigem Gas, beispielsweise Luft, an die Verteilerrohre 6 auf. Der Tankboden 6 weist mindestens einen Zuflussstutzen 24 für das zu reinigende Abwasser auf.

Am oberen Umfang des Durchlauftanks 2 sind Ablaufschlitze 10 für das gereinigte Abwasser vorgesehen. Die Ablaufschlitze 10 haben einen Querdurchmesser welcher kleiner ist, als der kleinste Durchmesser der schwebenden Füllkörper 34. Ein Überlaufwehr 12 ist ebenfalls am oberen Umfang des Durchlauftanks 2 vorgesehen, welches den Durchlauftank 2 am oberen Ende unterhalb der Ablaufschlitze 10 kragenförmig umschließt. Das Überlaufwehr 12 weist mindesten einen Abflussstutzen 24 zur Ableitung des gereinigten Abwassers auf.

Das Überlaufwehr 12 ist gegen Eindringen von Fremdstoffen durch einen Tankdeckel 14 geschützt, welcher einen größeren Durchmesser als das Überlaufwehr12 hat und in so weitem Abstand von der Oberkante des Überlaufwehrs 12 angeordnet ist, dass der Abgasstrom OG aus dem Durchlauftank 2 ungehindert ins Freie austreten kann.

Auf der Außenfläche des Durchlauftanks 2 ist eine Heizeinrichtung 16 vorgesehen, die unter Berücksichtigung des Volumens des Durchlauftanks 2 so ausgelegt ist, das die in dem Durchlauftank 2 enthaltene Flüssigkeit auf 20 bis 30°C, vorzugsweise 22 bis 28 °C aufgeheizt werden kann auch dann, wenn die Umgebungstemperatur geringer ist. In einer bevorzugten Ausführung ist die Heizeinrichtung Wärmetauscher 16 auf der Außenfläche des Durchlauftanks 2 mit mindestens einem Zuflussstutzen 18 und mindestens einem Abflussstutzen 20 für einen flüssigen Wärmeträger, beispielsweise Heizwasser. Die Heizeinrichtung ist mit einer Isolierung 22 aus schlecht die Wärme leitendem Isolierstoff vorgesehen, welche außen auf dem Durchlauftank 2 um den Wärmetauscher 16 herum angebracht ist und die Vorrichtung weitgehend umhüllt und vor Wärmeverlust schützt.

Zur Versorgung des Durchlaufbehälters mit einem sauerstoffhaltigen Gas ist ein Gebläse 28 vorgesehen, welches das Gas über eine Gaszuleitung 30 und durch Stutzen 32 für die Gaszufuhr in den mit frei beweglichen, in dem zu reinigenden Wasser schwebenden Füllkörpern 34 gefüllten Durchlauftank 2 fördert. Im Betrieb sind die aeroben Mikroorganismen an den Füllkörpern 34 angelagert und bilden an der Oberfläche der Füllkörper 34 eine Schicht. Daher sind die Füllkörper 34 mit einer möglichst großen Oberfläche ausgebildet.

Ferner weist die Vorrichtung einen Folattank 38 auf, der mit wässrig-verdünnter stabilisierter Folsäurelösung (Folat) FA befüllt ist. Zwischen dem Folattank 38 und dem in die Zuflussleitung 36 für das zu reinigende Rohwasser eingesetzten Impfstutzen 48 sind eine Folatleitung 40, eine Dosierpumpe 42, ein Rückschlagventil 44 und ein Regelventil 46 in dieser Reihenfolge vorgesehen.

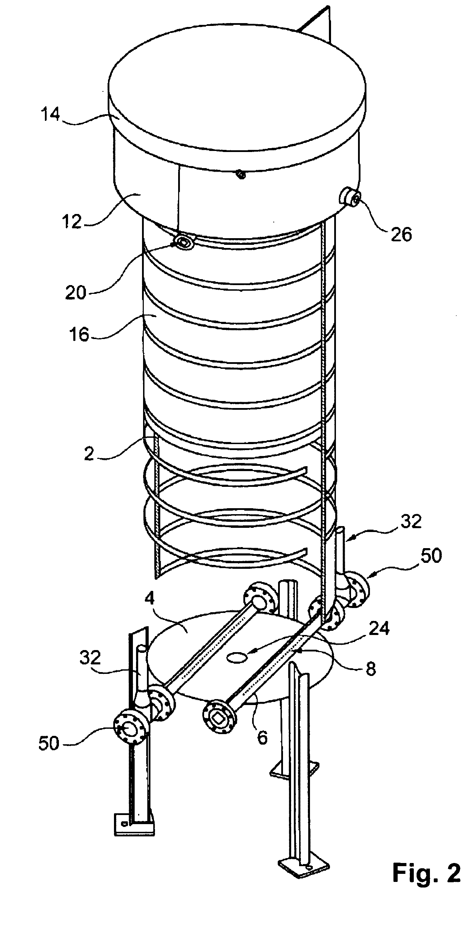

Fig. 2 zeigt eine perspektivische Teilansicht der Vorrichtung nach Fig. 1, wobei der Tankmantel eines Durchlauftanks 2 unten teilweise geschnitten dargestellt ist. Damit ist die Aufsicht auf den ebenen Tankboden 4 und die in den Tankboden 4 eingesetzten Verteilerrohre 6 sowie die Lochreihen der Belüftungsdüsen 8 in den Verteilerrohren 6 gezeigt.

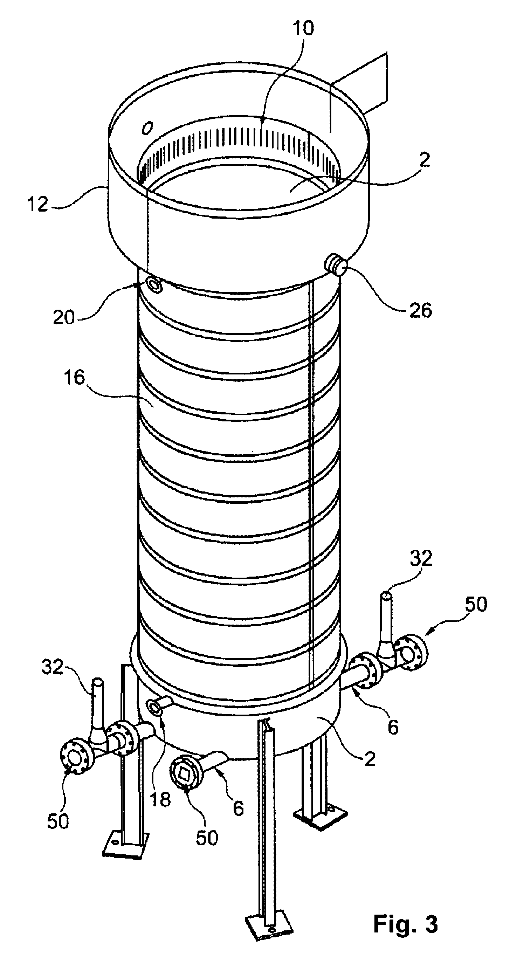

Fig. 3 zeigt eine perspektivische Teilansicht der Vorrichtung nach Fig. 1, wobei der Deckel 14 des Durchlauftanks 2 abgenommen ist. Dadurch sind die Ablaufschlitze 10 im oberen Teil des Durchlauftanks 2 zu sehen sowie der Wärmetauscher 16 nebst Wärmeträgerzuflussstutzen 18 und Wärmeträgerabflussstutzen 20. Ferner gezeigt sind das Überlaufwehr 12 nebst Abflussstutzen 26, die Schaugläser 50 und der Stutzen 32 für die Gaszufuhr am Ende der Verteilerrohre 6.

Wie aus Fig.1 zu ersehen ist, fließt im Betrieb der Vorrichtung der Strom (Volumen/Zeiteinheit) des Rohwassers RW durch die Zuflussleitung 36 zur Impfstelle 48 und vermischt sich dort mit dem Strom FS der verdünnten wässrigen Folsäurelösung. Das so mit stabilisierter Folsäure vermischte Rohwasser tritt durch den Zuflussstutzen 24 von unten in den Durchlauftank 2 ein. Der vorzugsweise runde Durchlauftank 2 enthält die frei beweglichen, schwebenden Füllkörper 34. Die Füllkörper 34 bestehen aus Kunststoff, vorzugsweise Polyethylen oder Polypropylen, und haben eine Dichte von etwa gleich der von Abwasser, sodass sie in dem Abwasser schweben. Die Füllkörper 34 weisen vorzugsweise die Form von gerippten Rohrabschnitten auf wobei die Rippen axial oder radial auf den Rohrabschnitten angebracht sein können. Vorzugsweise haben die Füllkörper 34 einen Rohrdurchmesser von 1 bis 2 Zentimetern und weisen eine innere Oberfläche von etwa 300 bis 800 Quadratmetern pro Kubikmeter auf.

Auf der Oberfläche der Füllkörper 34 siedeln sich aerobe Mikroorganismen an, welche durch ihren Stoffwechsel die Reinigung des Abwassers bewirken. Außer dem Rohwasserstrom RW, dem Strom der verdünnten wässrigen stabilisierten Folsäure FS tritt auch der Luftstrom G von unten durch die Belüftungsdüsen 8 in den Durchlauftank 2 ein.

Der den Verteilerrohren 6 bzw. den Belüftungsdüsen 8 zugeführte Gastrom G teilt sich durch die Vielzahl der Belüftungsdüsen 8 in Gasblasen auf, die im Durchlauftank 2 nach oben steigen, den Sauerstoff an das Wasser abgeben und den Inhalt samt den schwebenden Füllkörpern 34 gründlich durchmischen.

Das mit der Gaszuleitung 30 verbundene Gebläse 28, welches Luft aus der Umgebung ansaugt und komprimiert in die Gaszuleitung 30 fördert, sorgt dafür, dass der Gasstrom G gegen den hydrostatischen Druck im Durchlauftank 2 und den Druckverlust an den Belüftungsdüsen 8 aufrechterhalten wird.

Um die biologische Reinigungsleistung der erfindungsgemäßen Vorrichtung unabhängig von der Jahreszeit und der Witterung durchzuführen enthält die erfindungsgemäße Reinigungsvorrichtung eine Möglichkeit dem kalten Rohwasserstrom RW Wärme zuzuführen. Diese Wärmezufuhr geschieht durch den Wärmetauscher 16, durch den ein flüssiger Wärmeträger, z. B. warmes Wasser, der über den Wärmeträgerzuflussstutzen 18 in den Wärmetauscher 16 gepumpt und über den Wärmeträgerabflussstutzen 20 zur Wärmequelle zurückgepumpt wird.

Mittels der Dosierpumpe 42 wird der Volumenstrom FS der verdünnten wässrigen stabilisierten Folsäurelösung (im Handel erhältlich als DOSFOLAT®) über das Rückschlagventil 44 und das Regelventil 46 aus dem Folattank 38 in die Impfstelle 48 gefördert. Die Pumpleistung der Dosierpumpe d.h. der Volumenstrom FS wird in Abhängigkeit vom Volumenstrom des Rohwassers eingestellt, wobei sehr geringe Mengen, beispielsweise 0,5 bis 1 Liter Folsäure auf 1.000.000 Liter Wasser, ausreichen. Die in die erfindungsgemäße Vorrichtung integrierte Dosiervorrichtung für verdünnte wässrige stabilisierte Folsäure FA ermöglich den Betrieb der erfindungsgemäßen Vorrichtung mit erhöhter biologischer Reinigungsleistung pro Kubikmeter Durchlauf durch den Durchlauftank 2, wobei fast kein biologischer Überschussschlamm anfällt.

Das biologisch durch die auf den schwebenden Füllkörpern 34 siedelnden Mikrorganismen gereinigte Rohwasser tritt oben durch die Ablaufschlitze 10 aus dem Durchlauftank 2 in das Überlaufwehr 12 und verlässt als gereinigter Wasserstrom TW die erfindungsgemäße Vorrichtung über den Abflussstutzen 26.

### Bezugszeichenliste

- 2: Durchlauftank
- 4: Tankboden
- 5: Tankwand
- 6: Verteilerrohre
- 8: Belüftungsdüsen
- 10: Ablaufschlitze
- 12: Überlaufwehr
- 14: Tankdeckel
- 16: Wärmetauscher
- 18: Wärmeträgerzuflussstutzen
- 20: Wärmeträgerabflussstutzen
- 22: Isolierung
- 24: Zuflussstutzen
- 26: Abflussstutzen
- 28: Gebläse
- 30: Gaszuleitung
- 32: Stutzen für Gaszufuhr
- 34: Füllkörper
- 36: Zuflussleitung
- 38: Folattank
- 40: Folatleitung
- 42: Dosierpumpe
- 44: Rückschlagventil
- 46: Regelventil
- 48: Impfstutzen
- 50: Schauglas

- FA: Folatlösung
- FS: Folatstrom
- G: Gasstrom
- OG: Abgasstrom
- RW: Rohwasserstrom
- TW: Reinwasserstrom

## Patentansprüche

1. Vorrichtung zum Reinigen von Abwasser mit einem Durchlauftank (2) mit einem Tankboden (4), einer Tankwand (5), einem Zuflussstutzen (24) und einem Ablaufstutzen (26), wobei in dem Durchlauftank (2) Füllstoffkörper (34) vorhanden sind, an die aerobe Mikroorganismen angelagert sind, und wobei an dem Durchlauftank (2) eine Belüftungseinrichtung zur Belüftung des Abwassers in dem Durchlauftank (2) mit einem sauerstoffhaltigen Gas vorgesehen ist,
wobei der Zuflussstutzen (24) und die Belüftungseinrichtung an dem Tankboden (4) und der Ablaufstutzen (26) an einem oberen Bereich des Durchlauftanks (2) angeordnet sind,
wobei die Füllstoffkörper (34) ein spezifisches Gewicht etwa gleich dem spezifischen Gewicht des Abwassers haben, wobei die Füllstoffkörper (34) in dem Abwasser schweben, wobei
die Belüftung des Durchlauftanks (2) vom Boden her durch die Belüftungseinrichtung erfolgt, die an dem Tankboden (4) des Durchlauftanks (2) angeordnet ist und in den Tankboden (4) integrierte Verteilerrohre (6) mit Düsenöffnungen (8) aufweist, und wobei die Belüftung auf eine solche Gasmenge ausgelegt ist, dass das Abwasser und die darin schwebenden Füllkörper durchmischt und die Mikroorganismen an den Füllkörpern mit ausreichend Sauerstoff versorgt werden,
**dadurch gekennzeichnet, dass**
die Verteilerrohre (6) an mit dem Abwasser in Kontakt stehenden Seiten mit Düsenöffnungen (8) versehen sind, die die Form von Löchern oder Schlitzen haben und über die gesamte Länge der Verteilerrohre (6) verteilt sind.

2. Vorrichtung nach Anspruch 1, **dadurch gekennzeichnet, dass** die Verteilerrohre (6) rechteckig sind, und dass die zwei Seitenflächen der Verteilerrohre (6) im Winkel von 45 Grad zu dem Tankboden (4) stehen, so dass zwei Seiten der Verteilerrohre (6) mit dem zu reinigenden Abwasser in direkten Kontakt stehen.

3. Vorrichtung nach Anspruch 1, **dadurch gekennzeichnet, dass** die Düsenöffnungen (8) der Verteilerrohre (6) runde Bohrungen oder Schlitze mit etwa 3 bis 6 Millimeter größtem Durchmesser aufweisen.

4. Vorrichtung nach Anspruch 1, **dadurch gekennzeichnet, dass** Ablaufschlitze (10) für das gereinigte Abwasser am oberen Umfang des Durchlauftank (2) vorgesehen sind, wobei die Ablaufschlitze (10) einen Querdurchmesser haben, welcher kleiner ist als der kleinste Durchmesser der Füllstoffkörper (34).

5. Vorrichtung nach Anspruch 4, **dadurch gekennzeichnet, dass** ein Überlaufwehr (12) an dem Durchlauftank (2) am oberen Ende unterhalb der Ablaufschlitze (10) angeordnet ist, und dass das Überlaufwehr (12) den Ablaufstutzen (26) zur Ableitung des gereinigten Abwassers aufweist.

6. Vorrichtung nach Anspruch 1 oder 5, **dadurch gekennzeichnet, dass** ein Tankdeckel (14), welcher einen größeren Durchmesser als das ggf. vorgesehene Überlaufwehr (12) ausweist, in Abstand von dem Überlaufwehr (12) angeordnet ist.

7. Vorrichtung nach Anspruch 1, **gekennzeichnet durch** ein Gebläse (28) welches sauerstoffhaltiges Gas **durch** eine Gaszuleitung (30) und **durch** die Stutzen (32) für die Gaszufuhr in den gefüllten Durchlauftank (2) fördert.

8. Vorrichtung nach Anspruch 1, **gekennzeichnet durch** einen Folattank (38), der mit wässrig verdünnter, stabilisierter Folsäurelösung zu befüllen ist und der mit einer Zuflussleitung (36) für das Abwasser zu dem Durchlauftank (2) verbunden ist.

9. Vorrichtung nach Anspruch 8, **dadurch gekennzeichnet, dass** zwischen dem Folattank (38) und einem in die Zuflussleitung (36) für das zu reinigende Rohwasser eingesetzten Impfstutzen (48) eine Folatleitung (40), eine Dosierpumpe (42), ein Rückschlagventil (44) und ein Regelventil (46) vorgesehen sind.

## Claims

1. Device for cleaning waste water having a throughput tank (2) with a tank bottom (4), a tank wall (5),an inflow connecting pipe (24) and a outflow connecting pipe (26) wherein, in the throughput tank (2), filler bodies (34) are present to which aerobic microorganisms are adhered, and wherein a ventilation system for ventilating the waste water in the throughput tank (2) with an oxygen containing gas is connected to the throughput tank (2),
wherein the inflow connecting pipe (24) and the ventilation system are arranged at the tank bottom (4) and the outflow connecting pipe (26) is arranged at the upper area of the throughput tank (2),
wherein the filler bodies (34) have a specific weight approximately equal to the specific weight of the waste water and are suspended in the waste water, wherein
the ventilation of the throughput tank (2) from the bottom is done by the ventilation system which is arranged at the tank bottom (4) of the throughput tank (2) and comprises distributor tubes (6) with nozzle opening (8) integrated inti the tank bottom (4), and wherein the ventilation is designed to be such an amount of gas that the waste water and the filler bodies suspended therein, are mixed and that the microorganisms on the filler bodies are fed with sufficient oxygen,
**characterized in that**
distributor tubes (6) on their sides being in contact with the waste water, are provided with nozzle openings (8) which have the shape of holes or slits and are distributed across the whole length of the distributor tubes (6).

2. Device according to claim 1 **characterized in that** the distributor tubes (6) are rectangular, and that the two side surfaces of the distributor tubes (6) are arranged in an angle of 45° with respect to the tank bottom (4) so that two sides of the distributor tubes (6) are in contact with the waste water to be cleaned.

3. Device according to claim 1 **characterized in that** the nozzle openings (8) comprise round bores or slits having a maximum diameter of about 3 to 6 millimeter.

4. Device according to claim 1 **characterized in that** drainage slits (10) for the cleaned waste water are provided at the upper circumference of the throughput tank (2) wherein the drainage slits (10) have a cross section which is smaller than the smallest diameter of the filler bodies (34).

5. Device according to claim 4 **characterized in that** an overflow weir (12) is arranged on the throughput tank (2) at its upper end below the drainage slits (10), and that the overflow weir (12) comprises the outflow connecting pipe (26) for draining the cleaned waste water.

6. Device according to claim 1 or 5 **characterized in that** a tank cover (14) which has a larger diameter than the optionally provided overflow weir (12), is arranged spaced from the overflow weir (12).

7. Device according to claim 1 **characterized by** a blower (28) which feeds oxygen containing gas through a gas supply line (30) and through the stubs (32) for the gas supply into the filled throughput tank (2).

8. Device according to claim 1 **characterized by** a folate tank (38) which is to be filled with aqueous diluted, stabilized folic acid solution, which is connected with the supply line (36) for the waste water to the throughput tank (2)

9. Device according to claim 8 **characterized in that** a folate line (40), a dosage pump (42), a check valve (44) and a control valve (46) are provided in between the folate tank (38) and a dosage stub (48) inserted in the feeding line (36) for the waste water to be cleaned.

## Revendications

1. Dispositif d'épuration des eaux usées comprenant une cuve de passage (2) pourvue d'un fond de cuve (4), d'une paroi de cuve (5), d'un raccord d'arrivée (24) et d'un raccord d'évacuation (26), dans lequel des corps de remplissage (34), sur lesquels des micro-organismes aérobies sont fixés, sont présents dans la cuve de passage (2), et dans lequel un dispositif de ventilation destiné à ventiler les eaux usées dans la cuve de passage (2) à l'aide d'un gaz contenant de l'oxygène est prévu sur la cuve de passage (2),
dans lequel le raccord d'arrivée (24) et le dispositif de ventilation sont agencés sur le fond de cuve (4) et le raccord d'évacuation (26) est agencé sur une zone supérieure de la cuve de passage (2),
dans lequel les corps de remplissage (34) présentent un poids spécifique à peu près identique au poids spécifique des eaux usées, dans lequel les corps de remplissage (34) flottent dans les eaux usées,
dans lequel la ventilation de la cuve de passage (2) s'effectue à partir du fond par l'intermédiaire du dispositif de ventilation, qui est agencé sur le fond de cuve (4) de la cuve de passage (2) et qui comprend des tuyaux de distribution (6) intégrés dans le fond de cuve (4) et pourvus d'orifices de buse (8), et dans lequel la ventilation est adaptée à une quantité de gaz telle que les eaux usées et les corps de remplissage y flottant soient mélangés et que les micro-organismes sur les corps de remplissage soient suffisamment alimentés en oxygène,
**caractérisé en ce que**
les tuyaux de distribution (6) sont pourvus sur leurs côtés en contact avec les eaux usées d'orifices de buse (8), qui présentent la forme de trous ou de fentes et qui sont répartis sur toute la longueur des tuyaux de distribution (6).

2. Dispositif selon la revendication 1, **caractérisé en ce que** les tuyaux de distribution (6) sont rectangulaires, et **en ce que** les deux surfaces latérales des tuyaux de distribution (6) forment un angle de 45 degrés avec le fond de cuve (4), de sorte que deux faces des tuyaux de distribution (6) sont en contact direct avec les eaux usées à épurer.

3. Dispositif selon la revendication 1, **caractérisé en ce que** les orifices de buse (8) des tuyaux de distribution (6) comportent des trous ronds ou des fentes dont le plus grand diamètre est sensiblement due 3 à 6 millimètres.

4. Dispositif selon la revendication 1, **caractérisé en ce que** des fentes d'évacuation (10) pour les eaux usées épurées sont ménagées à la périphérie supérieure de la cuve de passage (2), dans lequel les fentes d'évacuation (10) présentent un diamètre transversal qui est inférieur au plus petit diamètre des corps de remplissage (34).

5. Dispositif selon la revendication 4, **caractérisé en ce qu'**un déversoir de trop-plein (12) est agencé sur la cuve de passage (2) à l'extrémité supérieure au-dessous des fentes d'évacuation (10), et **en ce que** le déversoir de trop-plein (12) comprend le raccord d'évacuation (26) destiné à évacuer les eaux usées épurées.

6. Dispositif selon la revendication 1 ou 5, **caractérisé en ce qu'**un couvercle de cuve (14), lequel présente un diamètre supérieur à celui du déversoir de trop-plein (12) prévu le cas échéant, est agencé à distance du déversoir de trop-plein (12).

7. Dispositif selon la revendication 1, **caractérisé par** une soufflante (28), laquelle transporte le gaz contenant de l'oxygène à travers une conduite d'amenée de gaz (30) et à travers les raccords (32) pour l'amenée de gaz dans la cuve de passage (2) remplie.

8. Dispositif selon la revendication 1, **caractérisé par** une cuve de folate (38), qui doit être remplie d'une solution d'acide folique stabilisée diluée dans de l'eau et qui est reliée à une conduite d'arrivée (36) pour les eaux usées se dirigeant vers la cuve de passage (2).

9. Dispositif selon la revendication 8, **caractérisé en ce qu'**une conduite de folate (40), une pompe de dosage (42), une soupape anti-retour (44) et une soupape de régulation (46) sont prévues entre la cuve de folate (38) et un raccord d'inoculation (48) inséré dans la conduite d'arrivée (36) pour les eaux brutes à épurer.
